# EUROPEAN PATENT SPECIFICATION

(11) **EP 2 088 755 B1**
(45) Date of publication and mention of the grant of the patent: **15.05.2013**
(21) Application number: 08151197.4
(22) Date of filing: 08.02.2008
(51) Int. Cl.: H04M 1/667, H04M 1/02

(54) **Multi-function slide element for a mobile communication device**
Multifunktions-Gleitelement für ein Mobilkommunikationsgerät
Élément coulissant multifonctions pour un dispositif de communications mobile

(43) Date of publication of application: 12.08.2009
(73) Proprietor: Research In Motion Limited, Waterloo, ON N2L 3W8 (CA)
(72) Inventor: Griffin, Jason, Ontario N2P 2L3 (CA)
(74) Representative: Moore, Barry

(56) References cited:
- EP-A- 1 513 323
- WO-A-2007/147425
- DE-U1- 29 921 010
- JP-A- 2002 300 257

## Description

The present application relates generally to a multi-function slide element for a mobile communication device.

The development of mobile communication devices over the past decade has brought upon the evolution of increased functionality for these devices. Instead of being used solely for voice communication purposes, many current devices offer added functionality such as data communication, appointment tracking, memo writing, playing music or taking pictures. These added functionalities are typically integrated within the mobile communication device.

Generally, these added functionalities, along with basic functionalities, can be used at any time with user assistance or intervention. For instance, a user typically has to select an icon or press a button to start a music player or take a picture. Without a protective covering, the button or icon can be accidentally depressed thereby causing unwanted pictures to be taken or music to be played which, in turn, can drain a battery. This is especially problematic if the mobile communication device is located within a user's pocket or purse whereby the accidental button press goes unnoticed. Also, the parts performing the added functionality, such as a speaker or a camera lens, can easily get dirty if not covered.

W02007/147425 discloses a mobile electronic device with a slidable cover which can occupy two different positions. In a first position of the slidable cover, a camera lens and a graphic containing an optical illusion are covered. In a second position, the camera lens and the graphic are uncovered. In the first position a camera function is deactivated and in the second position, the camera function is activated.

DE29921010 discloses a mobile phone having two oppositely located imaging units. The mobile phone further includes a slidable cover that in a first position covers both imaging units, in a second position uncovers one of the two imaging units so that it can be used and in a third position uncovers the other of the two imaging units so that it can be used. Also, the footprint of the mobile phone changes as the slidable cover is urged between positions.

JP2002300257 discloses a portable telephone terminal with a camera. A slide cover is provided which covers and uncovers the camera such that the camera lens is revealed. However, when the slide cover is moved, the footprint of the device is changed.

GB2347894 discloses a keypad including a locking plate which is moveable, via a sliding switch from a disengaged position in which each key is free to move, to an engaged position in which depression of at least some of the keys is restrained.

### GENERAL

In a first aspect, the present application may provide a mobile communication device comprising: a body; and a sliding element, slidable longitudinally along the body within overall dimensions of the device, between a first and a second position, such that when sliding between said first and second positions the overall dimensions of the device do not change; wherein when said sliding element is in one of said first or second positions, a button for activating a selected function of the device is locked and the selected function is disabled, while in the other of said first or second positions the button is unlocked and the selected function is enabled; wherein the button remains visible when the sliding element is in either of the first or second positions.

When the sliding element is in one of the first or second positions, the device may be placed in a stand-by mode, while in the other of the first or second positions the device may be in operational mode.

Other aspects and features of the present application will become apparent to those ordinarily skilled in the art upon review of the following description of specific embodiments in conjunction with the accompanying figures.

### BRIEF DESCRIPTION OF THE DRAWINGS

Embodiments of the present application will now be described, by way of example only, with reference to the attached Figures, wherein:

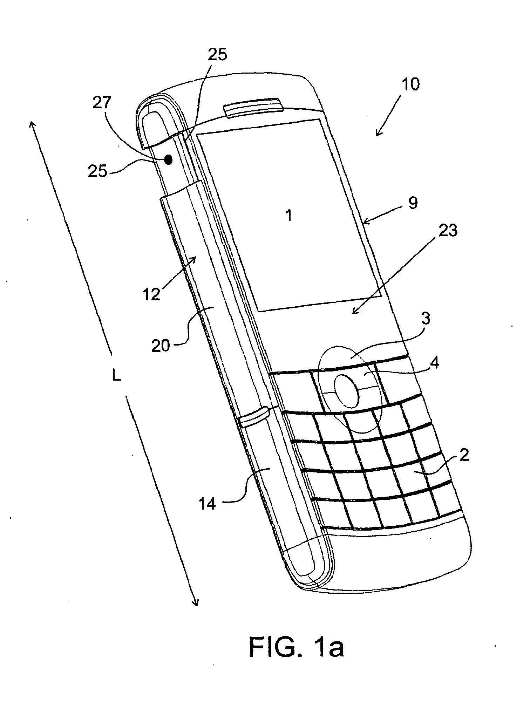

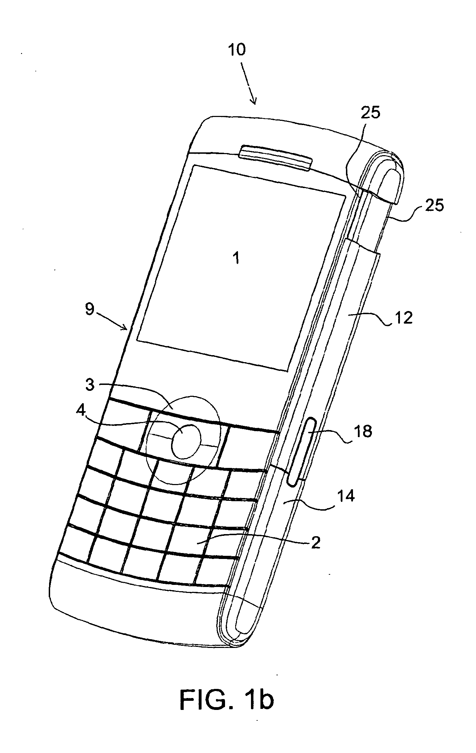

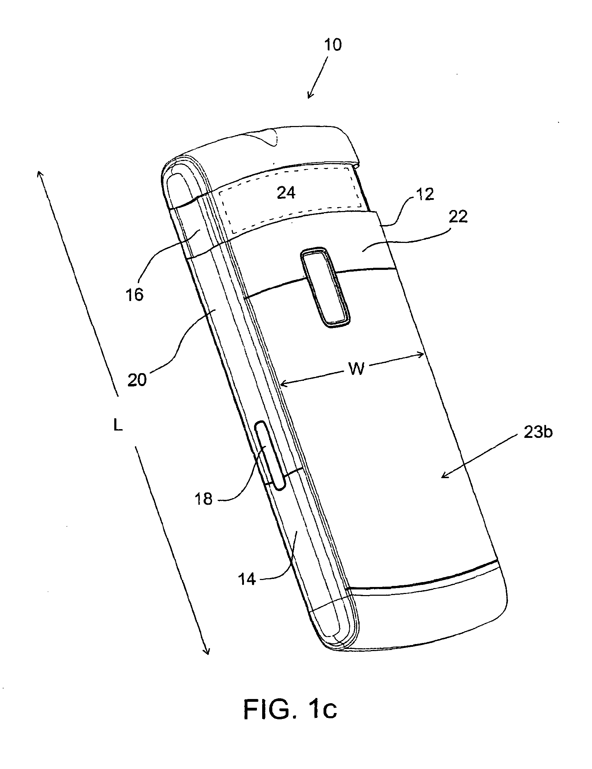

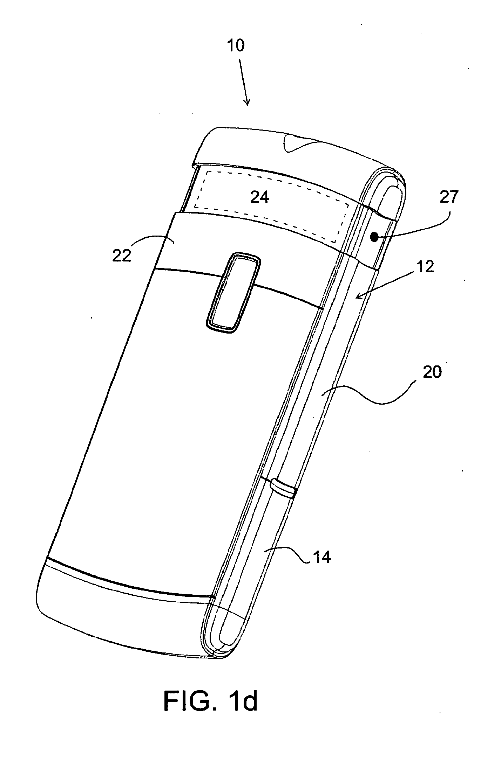

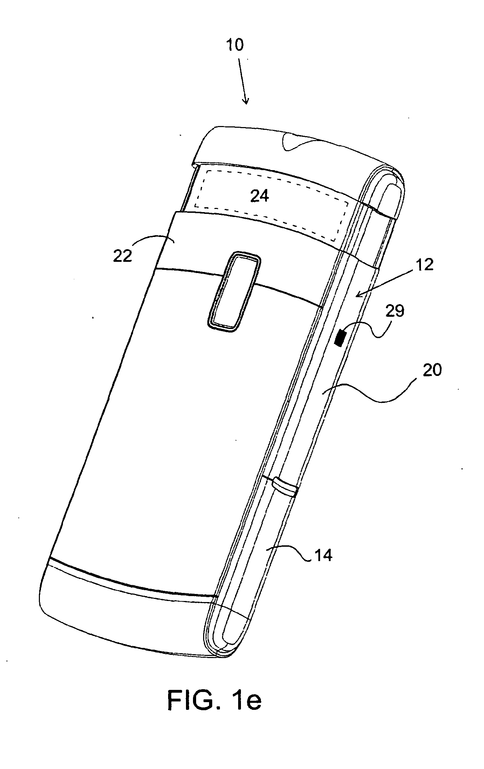

Figures 1 a to 1 d are front and rear perspective views of a mobile communication device with a sliding element in a first position;
Figure 1 e is a rear perspective view of a second embodiment of a mobile communication device with a sliding element;
Figures 2a to 2d are front and rear perspective views of the mobile communication device of Figures 1a to 1d with the sliding element in a second position;
Figure 3a is a side view of the mobile communication device with the sliding element in the first position;
Figure 3b is a side view of the mobile communication device with the sliding element in the second position;
Figure 4 is an exploded view of a first embodiment of a sliding element for use with a mobile communication device;
Figure 5 is an exploded view of a second embodiment of a sliding element for use with a mobile communication device; and
Figures 6a and 6b are side views of a locking mechanism for an actuator.

### DESCRIPTION OF PREFERRED EMBODIMENTS

Generally, the present application provides a multi-function sliding element, or portion, for a mobile communication device. The sliding portion can be in a first position or a second position whereby at least one selected mobile communication device functionality is disabled and when the sliding portion is in the other of the first or second position, the at least one selected communication device functionality is not disabled. Furthermore, when in the first or second position, additional device functionality can be revealed to a user. Whether the sliding portion is in the first or second position, the overall dimensional footprint of the device is not changed. In another embodiment, when the sliding element is in the first or second position, the device is placed in a stand-by mode and when in the other position is in an operational mode.

Turning to Figures 1a to 1d, front and rear perspective views of a mobile communication device with the sliding element in a first position is shown. As shown in Figure 1a, the mobile communication device 10 has a body 9 which includes a primary display screen 1, a keyboard/keypad 2, a set of buttons 3 and a trackball 4. It will be understood that the trackball 4 can also be a joystick, scroll wheel, roller wheel, trackball or touchpad or the likes, or another button. As will be further understood by one skilled in the art, the device includes other parts which are not shown or described as they are not essential to the current application.

The mobile communication device 10 further includes a sliding element 12 and a fixed portion 14 surrounding a frame 16 of the communication device 10. The sliding element 12 comprises two side portions 20, located along opposite lengths of the device, and a transverse portion 22 connecting the two side portions 20. The transverse portion 22 is located across a width (W) of a face 23, such as the rear face 23b, of the communication device 10. As shown in Figures 1a to 1d, the side portions 20 are preferably a pair of arms which extend away, perpendicularly, from the transverse portion 22, and mate with corresponding grooves, or tracks, 25 defined in the frame 16 of the mobile communication device 10. The grooves allow the sliding element 12 to slide longitudinally along a longitudinal axis (L) of the body 9 of the communication device 10. The grooves 25 also assist in preventing or restricting the sliding element 12 from being removed from the device 10.

As shown in Figures 1 b and 1c, a button 18, such as a camera shutter button, is located between, and surrounded by, the sliding portion 12 and the fixed portion 14 on one side of the device 10 and is held in place, with respect to the device, by the sliding element when the sliding element 12 is in the first position. The sliding element 12 operates as a lock to the button 18 so that that the button 18 can not be accidentally pressed. As shown, the surface of the button 18 is preferably flush with the surface of the sliding 12 and fixed 14 portions so that there is a smooth overall surface to the device 10, which further prevents the button 18 from being accidentally pressed. In this first position, the device is preferably in a stand-by mode whereby the keyboard and various other aspects of the device are locked from operation. Minimal power is used to perform basic functions (as described below) but power consumption is minimized.

The mobile communication device 10 can include a sensor 27, such as a Hall-effect sensor, to recognize the position of the sliding element 12 and to transmit a signal to a processor (not shown) within the communication device 10 to lock activation of the camera shutter button 18 or enter into a stand-by mode. Alternatively, the sensor can be used to unlock activation of the button 18 or exit the stand-by mode. In one embodiment, the sensor 27 is located on the surface of the device 10 in close proximity to the sliding element 12. The slide element 12 includes a magnet (not shown) such that when the sliding element 12 is adjacent the sensor, the sensor 27 can detect the presence of the magnet indicating the sliding element 12 is in one of the two positions. In a further embodiment, a mechanical detector can be mounted to the frame of the device that is activated by a tab or protrusion on the sliding element 12.

A software module (not shown), stored within the processor, is executed when the processor receives the signal from the sensor so that any depression of the shutter button 18 is ignored if the signal has not been transmitted. It is appreciated that alternate sensor devices can be used, as known in the art.

As shown in Figure 1c, the mobile communication device 10 includes a secondary display screen 24, which is available for use by, or revealed to, the user when the sliding element 12 is in the first position. The display screen 24 can be used to display information such as the date, time or the number of unread messages on the device 10, or any other information.

In an alternative embodiment as shown in Figure 1e, the sliding element 12 is held in place by a locking tab 29 which must be released before the sliding element 12 can be moved to the second position.

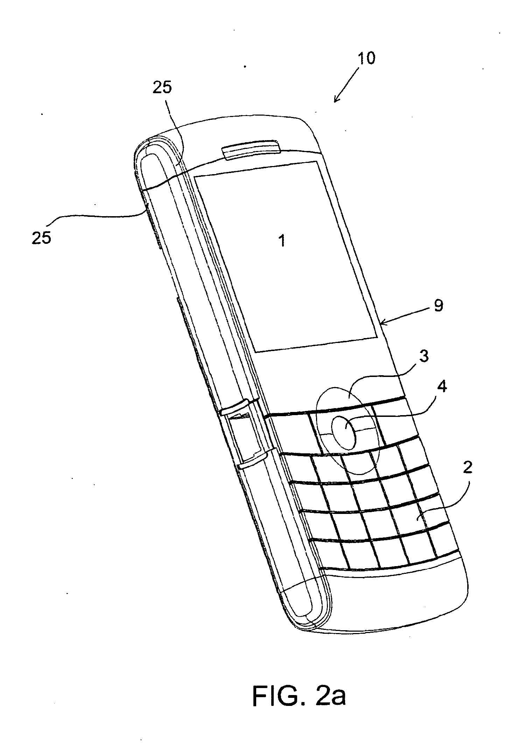

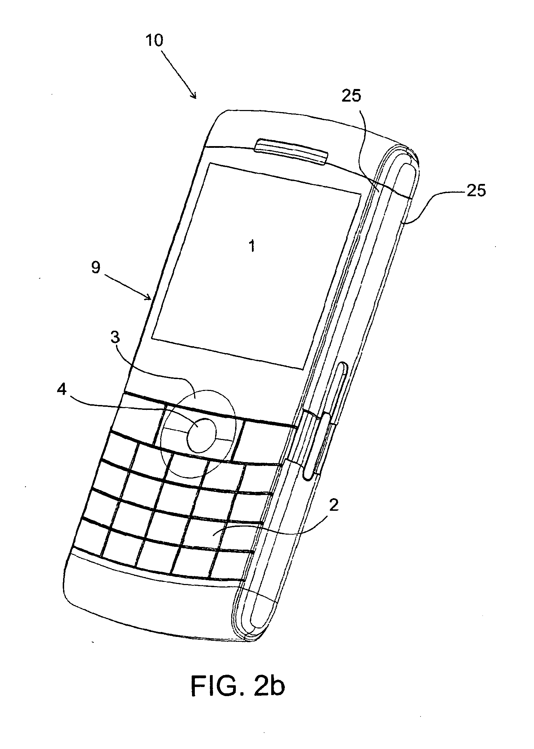

Turning to Figures 2a to 2d, front and rear perspective views of the mobile communication device with the sliding element in a second position is shown. In the second position, the sliding element 12 has been urged away from the fixed portion 14 while maintaining an overall dimensional footprint of the device.

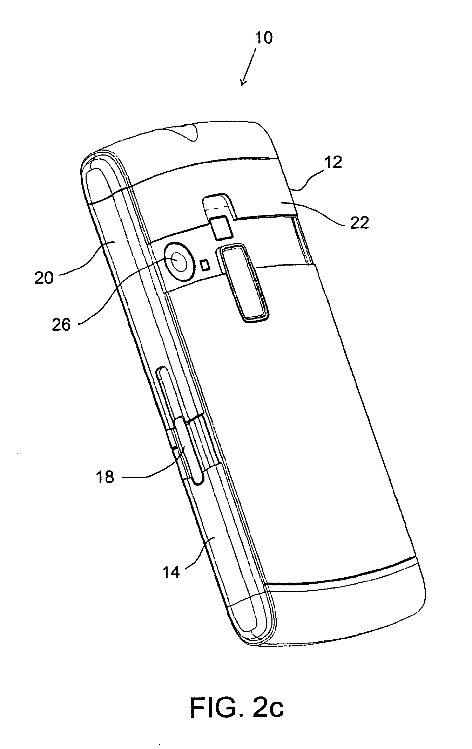

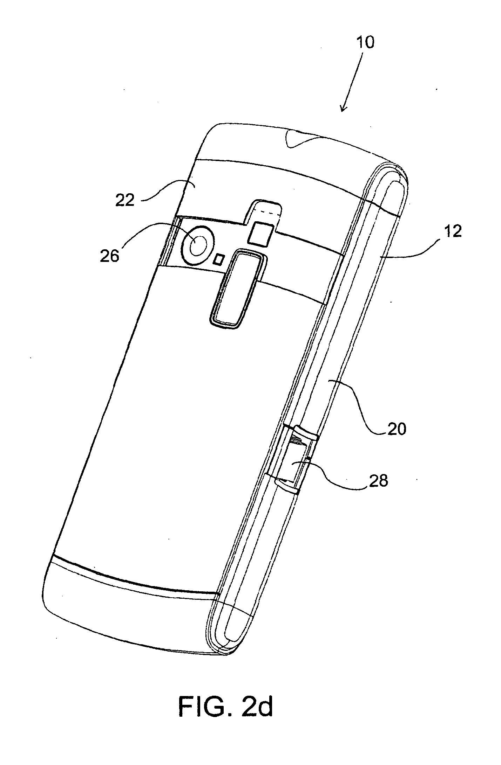

When the sliding element 12 is in the second position, the at least one selected device functionality, such as the camera shutter button 18, is enabled for use. This functionality includes a camera lens 26 (Figures 2c and 2d), which operates in cooperation with the camera shutter button 18 to provide the camera functionality. As will be understood, operation of the camera requires more than the camera shutter button 18 and the camera lens 26, however, this subject matter will be understood by one skilled in the art and is not illustrated. Furthermore, when the sliding element 12 is in the second position, access to a USB port 28 is also provided to the user. When in the second position, the sliding element 12 also covers the secondary display screen 24.

In a preferred embodiment, when the sliding element 12 is moved from the first position, a signal is transmitted to the processor (not shown) to exit the stand-by mode and enter an operational mode whereby full mobile communication device functionality is available to the user.

When the sliding portion 12 is in the first position, the transverse portion 22 of the sliding element 12 protects the camera lens 26 and one of the side portions 20 protects the USB port 28 from foreign particulates. Similarly, in the second position, the transverse portion 22 of the sliding element 12 protects the secondary display screen 24 from foreign particulates or damage.

Other examples of selected device functionalities which can be revealed to the user when the device is in the second position, include, but are not limited to, a set of control buttons, speakers, or both, for music playing functionality.

In the current embodiment, when in the first position, the sliding element 12 protects or restricts user access to at least one selected device functionality such that use of the selected functionality is disabled, while in the second position, the at least one selected device functionality is no longer disabled. This can be achieved by physically locking the functionality, such as the button, or by locking the device in a stand-by mode. As will be understood, the first position and the second position are interchangeable in that the at least one selected device functionality can be disabled when the sliding element 12 is in the second position and enabled when the sliding element 12 is in the first position.

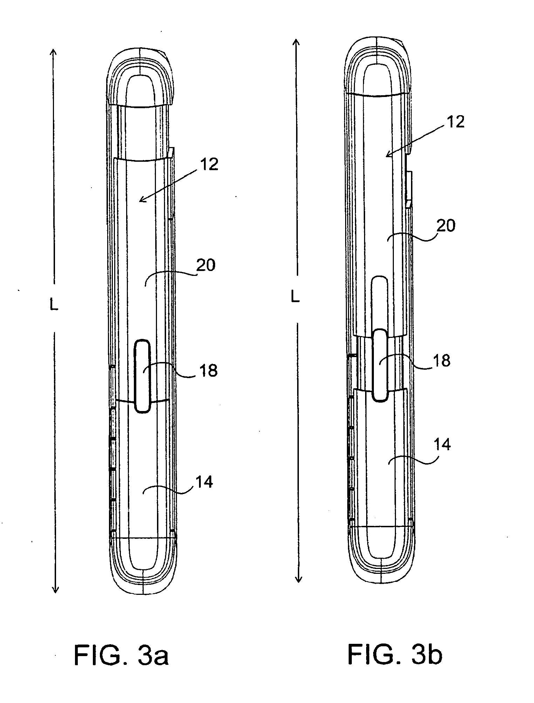

Figures 3a and 3b are side views of the communication device 10 in the first position (Figure 3a) and the second position (Figure 3b). As can be seen in these Figures, when in the first or second position, the size of the device remains the same with only the sliding portion 12 moving with respect to the fixed portion 14. Therefore, the dimensional footprint of the mobile communication device 10 is not changed whether the device is in the first or second position thereby preserving the overall size of the device 10.

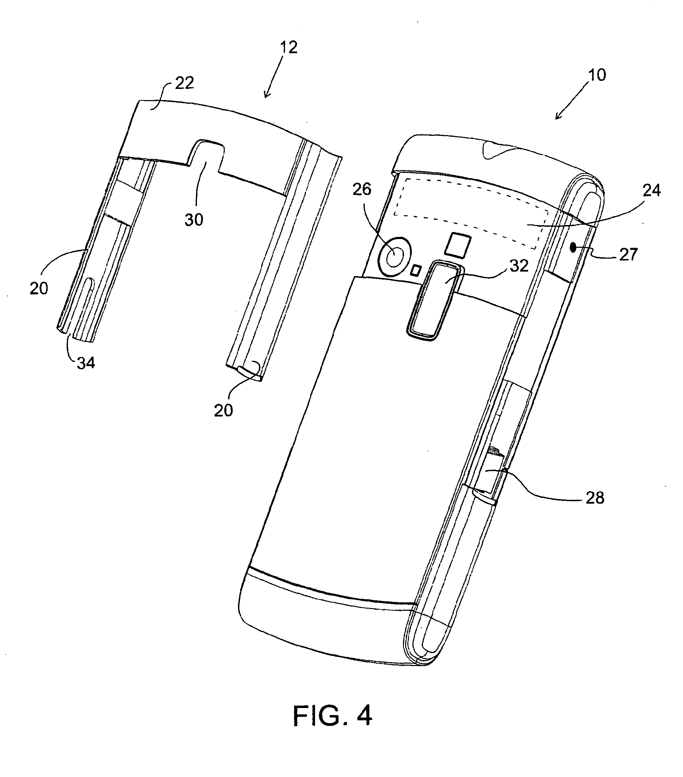

Figure 4 provides an semi-exploded view showing the sliding element 12 detached from the mobile communication device 10. As can be seen, the sliding element 12 further includes a notch 30 which mates with a corresponding portion 32 on the mobile communication device 10 when the sliding element 12 is in the first position. This notch 30 and corresponding portion 32 can further serve to position the sliding element 12 in the first position. Also, the sensor (described above) can be located atop the notch 30 or the portion 32 to sense the location, or presence, of the sliding element 12. The sliding element 12 includes a cut-out portion 34 in one of its side portions 20 to receive the camera shutter button 18.

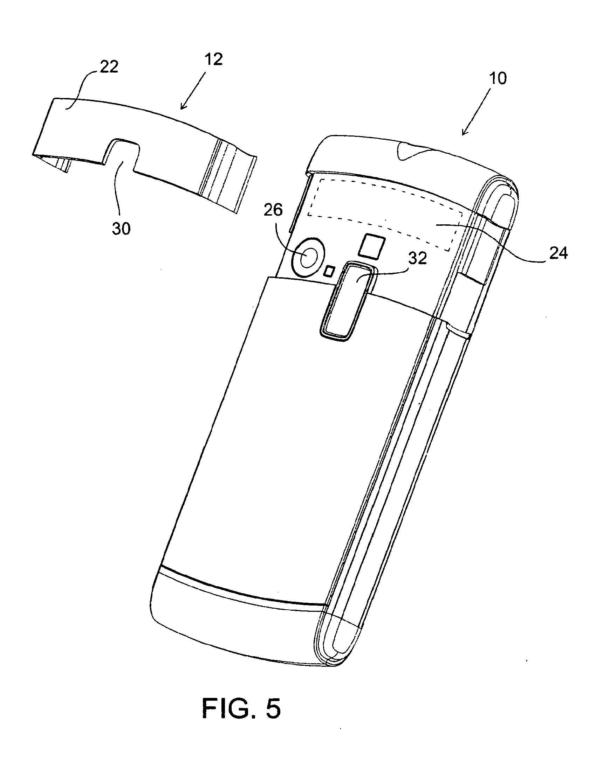

Turning to Figure 5, a second embodiment of a sliding element 12 is shown. The size of the side portions 20 are reduced, such that they are the same height as the transverse portion. The sliding element 12 is used to protect the camera in the first position, and the secondary display screen 24 in the second position.

While in the first position, additional device functionality is revealed for use, while in the second position, the additional device functionality is no longer revealed, although this might not always be the case. As shown, when the sliding element 12 is in the first position, device functionality, such as the secondary display screen 24, is revealed to display information when the user is looking at the rear of the mobile communication device 10, while the additional device functionality is disabled. When the sliding element 12 is in the second position, the additional device functionality is no longer disabled, while the device functionality is covered.

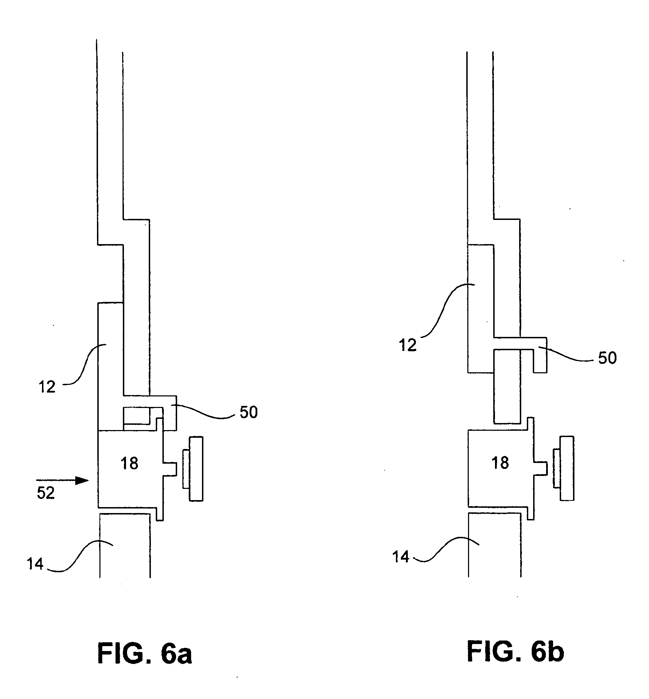

In another embodiment, as schematically shown in Figures 6a and 6b, which show the sliding element in the first and second positions, respectively, the sliding element 12 includes a tab 50 that assists to restrict movement of the button 18 in an inward direction, as illustrated by arrow 52, when the sliding element is in the first position, to provide an additional safeguard against the button 18 being accidentally pressed. In the first position, the sliding element 12 and the fixed element 14 are both adjacent the button 18, thereby providing a smooth surface to the device 10. The tab 50 is located behind the button 18 and locks the button 18 in place. When the sliding element 12 is moved, or urged, to the second position, the tab 50 is also moved away from its locking position, thereby allowing the button 18 to be clicked, or urged inward, to activate an actuator button 52 within the device. The actuator button 52, is preferably pre-programmed with a predetermined device functionality.

In a further embodiment, if the device is not populated with a secondary display 24 or a camera 26, the space can be used as a storage cavity to store accessories/peripherals for the device. For example: GPS puck, memory cards (SD, micro-SD or CF cards), extra battery, Bluetooth® headset, etc. The accessories/peripherals can be specifically molded to fit into that space.

While the embodiments described herein are directed to particular implementations of the portable electronic device, it will be understood that modifications and variations to these embodiments are within the scope of the appended claims. For example, the size and shape of many of the features of the portable electronic device can differ while still providing the same function. Many other modifications and variations may occur to those skilled in the art. All such modifications and variations are believed to be within the scope of the appended claims.

## Claims

1. A mobile communication device (10) comprising:
a body (9); and
a sliding element (12), slidable longitudinally along the body (9) within overall dimensions of the device (10), between a first and a second position, such that when sliding between said first and second positions the overall dimensions of the device (10) do not change;
wherein when said sliding element (12) is in one of said first or second positions, a button (18) for activating a selected function of the device (10) is locked and the selected function is disabled, while in the other of said first or second positions the button (18) is unlocked and the selected function is enabled;
wherein the button (18) remains visible when the sliding element (12) is in either of the first or second positions.

2. The mobile communication device (10) of Claim 1 where the selected function comprises camera functionality or music playing functionality.

3. The mobile communication device (10) of Claim 1 or Claim 2 wherein said device is configured such that, when said sliding element (12) is in one of said first or second positions, an added device functionality is revealed to a user and while in the other of said first or second positions, the added device functionality is not revealed.

4. The mobile communication device (10) of Claim 3 wherein the added device functionality comprises a secondary display screen (24) or a Universal Serial Bus 'USB' port.

5. The mobile communication device (10) of any one of the preceding Claims wherein the sliding element (12) extends across a face of the mobile communication device (10).

6. The mobile communication device (10) of Claim 5 wherein the face comprises a rear face.

7. The mobile communication device (10) of Claim 6 wherein the sliding element (12) comprises:
a transverse portion (22), extending the width of the body (9); and
a pair of side portions (20), attached at opposite ends of the transverse portion.

8. The mobile communication device (10) of Claim 7 wherein the side portions (20) comprise a pair of arms extending away from the transverse portion (22).

9. The mobile communication device (10) of Claim 8 wherein the side portions (20) are located within grooves (25) defined in a frame (16) of the mobile communication device, and are configured to slide longitudinally along the body (9).

10. The mobile communication device (10) of Claim 7 wherein the side portions (20) extend perpendicularly from the transverse portion (22) and longitudinally along the body (9).

11. The mobile communication device (10) of any one of the preceding Claims further comprising a sensor (27) for sensing when the sliding element (12) is in one of said first or second positions.

12. The mobile communication device (10) of Claim 11 wherein the sensor (27) is located on a frame (16) of the mobile communication device.

13. The mobile communication device (10) of any one of the preceding Claims further comprising a tab for restricting access to the added functionality when the sliding element (12) is in one of said first or second positions.

14. The mobile communication device (10) of any one of the preceding Claims further comprising a locking element (29) for locking said sliding element (12) in said one of said first or second positions.

15. The mobile communication device (10) of Claim 14 wherein the locking element (29) is located on the sliding element (12).

16. The mobile communication device (10) of any one of the preceding Claims, wherein when said sliding element (12) is in one of said first or second positions, said device is placed in a stand-by mode, while in the other of said first or second positions the device is in an operational mode.

## Patentansprüche

1. Eine mobile Kommunikationsvorrichtung (10), die aufweist:
einen Körper (9); und
ein Verschiebeelement (12), das in Längsrichtung entlang des Körpers (9) innerhalb der Gesamtabmessungen der Vorrichtung (10) zwischen einer ersten und einer zweiten Position verschiebbar ist derart, dass sich bei einem Verschieben zwischen den ersten und zweiten Positionen sich die Gesamtabmessungen der Vorrichtung (10) nicht ändern;
wobei, wenn das Verschiebeelement (12) in einer der ersten oder zweiten Positionen ist, ein Knopf (18) zum Aktivieren einer ausgewählten Funktion der Vorrichtung (10) gesperrt ist und die ausgewählte Funktion deaktiviert ist,
während in der anderen der ersten oder zweiten Positionen der Knopf (18) entsperrt ist und die ausgewählte Funktion aktiviert ist;
wobei der Knopf (18) sichtbar bleibt, wenn das Verschiebeelement (12) in einer der ersten oder zweiten Positionen ist.

2. Die mobile Kommunikationsvorrichtung (10) gemäß Anspruch 1, wobei die ausgewählte Funktion eine Kamerafunktionalität oder eine Musikabspielfunktionalität aufweist.

3. Die mobile Kommunikationsvorrichtung (10) gemäß Anspruch 1 der Anspruch 2, wobei die Vorrichtung derart konfiguriert ist, dass, wenn das Verschiebeelement (12) in einer der ersten oder zweiten Positionen ist, eine zusätzliche Vorrichtungsfunktionalität für einen Benutzer offengelegt ist, und während in der anderen der ersten oder zweiten Positionen die zusätzliche Vorrichtungsfunktionalität nicht offengelegt ist.

4. Die mobile Kommunikationsvorrichtung (10) gemäß Anspruch 3, wobei die zusätzliche Vorrichtungsfunktionalität einen sekundären Anzeigebildschirm (24) oder einen USB(Universal Serial Bus)-Anschluss aufweist.

5. Die mobile Kommunikationsvorrichtung (10) gemäß einem der vorhergehenden Ansprüche, wobei sich das Verschiebeelement (12) über eine Fläche der mobilen Kommunikationsvorrichtung (10) erstreckt.

6. Die mobile Kommunikationsvorrichtung (10) gemäß Anspruch 5, wobei die Fläche eine rückwärtige Fläche aufweist.

7. Die mobile Kommunikationsvorrichtung (10) gemäß Anspruch 6, wobei das Verschiebeelement (12) aufweist:
einen Querteil (22), der sich über die Breite des Körpers (9) erstreckt; und
ein Paar von Seitenteilen (20), die an entgegengesetzten Enden des Querteils angebracht sind.

8. Die mobile Kommunikationsvorrichtung (10) gemäß Anspruch 7, wobei die Seitenteile (20) ein Paar von Armen aufweisen, die sich weg von dem Querteil (22) erstrecken.

9. Die mobile Kommunikationsvorrichtung (10) gemäß Anspruch 8, wobei sich die Seitenteile (20) in Rillen (25) befinden, die in einem Rahmen (16) der mobilen Kommunikationsvorrichtung definiert sind, und konfiguriert sind, in Längsrichtung entlang des Körpers (9) verschoben zu werden.

10. Die mobile Kommunikationsvorrichtung (10) gemäß Anspruch 7, wobei sich die Seitenteile (20) rechtwinklig von dem Querteil (22) und in Längsrichtung entlang des Körpers (9) erstrecken.

11. Die mobile Kommunikationsvorrichtung (10) gemäß einem der vorhergehenden Ansprüche, die weiter aufweist einen Sensor (27) zum Erfassen, wenn das Verschiebeelement (12) in einer der ersten oder zweiten Positionen ist.

12. Die mobile Kommunikationsvorrichtung (10) gemäß Anspruch 11, wobei sich der Sensor (27) auf einem Rahmen (16) der mobilen Kommunikationsvorrichtung befindet.

13. Die mobile Kommunikationsvorrichtung (10) gemäß einem der vorhergehenden Ansprüche, die weiter einen Vorsprung aufweist zum Beschränken eines Zugriffs auf die zusätzliche Funktionalität, wenn das Verschiebeelement (12) in einer der ersten oder zweiten Positionen ist.

14. Die mobile Kommunikationsvorrichtung (10) gemäß einem der vorhergehenden Ansprüche, die weiter ein Sperrelement (29) aufweist zum Sperren des Verschiebeelements (12) in der einen der ersten oder zweiten Positionen.

15. Die mobile Kommunikationsvorrichtung (10) gemäß Anspruch 14, wobei sich das Sperrelement (29) auf dem Verschiebeelement (12) befindet.

16. Die mobile Kommunikationsvorrichtung (10) gemäß einem der vorhergehenden Ansprüche, wobei, wenn das Verschiebeelement (12) in einer der ersten oder zweiten Positionen ist, die Vorrichtung in einen Bereitschaftsmodus gesetzt ist, während in der anderen der ersten oder zweiten Positionen die Vorrichtung in einem Betriebsmodus ist.

## Revendications

1. Dispositif de communication mobile (10), comprenant :
un corps (9) ; et
un élément coulissant (12), pouvant coulisser longitudinalement le long du corps (9) dans la limite des dimensions générales du dispositif (10) entre une première et une seconde position, si bien que le coulissement entre lesdites première et seconde positions ne modifie pas les dimensions générales du dispositif (10) ;
dans lequel, lorsque ledit élément coulissant (12) se trouve dans l'une desdites première et seconde positions, un bouton (18) destiné à activer une fonction sélectionnée du dispositif (10) est verrouillé et la fonction sélectionnée est inhibée, tandis que, dans l'autre desdites première et seconde positions, le bouton (18) est déverrouillé et la fonction sélectionnée est validée ;
dans lequel le bouton (18) reste visible lorsque l'élément coulissant (12) est dans la première ou dans la seconde position.

2. Dispositif de communication mobile (10) selon la revendication 1, dans lequel la fonction sélectionnée comprend une fonctionnalité de caméra ou une fonctionnalité de reproduction musicale.

3. Dispositif de communication mobile (10) selon la revendication 1 ou la revendication 2, dans lequel ledit dispositif est configuré de telle manière que, lorsque ledit élément coulissant (12) est dans l'une desdites première et seconde positions, une nouvelle fonctionnalité du dispositif est révélée à l'utilisateur tandis que, dans l'autre desdites première et seconde positions, la nouvelle fonctionnalité du dispositif n'est pas révélée.

4. Dispositif de communication mobile (10) selon la revendication 3, dans lequel la nouvelle fonctionnalité du dispositif comprend un écran d'affichage secondaire (24) ou un port de bus série universel, USB.

5. Dispositif de communication mobile (10) selon l'une quelconque des revendications précédentes, dans lequel l'élément coulissant (12) s'étend au travers d'une face du dispositif de communication mobile (10).

6. Dispositif de communication mobile (10) selon la revendication 5, dans lequel la face comprend une face arrière.

7. Dispositif de communication mobile (10) selon la revendication 6, dans lequel l'élément coulissant (12) comprend :
une partie transversale (22) s'étendant sur la largeur du corps (9) ; et
deux parties latérales (20) disposées à des extrémités opposées de la partie transversale.

8. Dispositif de communication mobile (10) selon la revendication 7, dans lequel les parties latérales (20) comprennent une paire de branches qui s'étendent à partir de la partie transversale (22).

9. Dispositif de communication mobile (10) selon la revendication 8, dans lequel les parties latérales (20) sont situées dans des rainures (25) définies dans un cadre (16) du dispositif de communication mobile et sont configurées pour coulisser longitudinalement le long du corps (9).

10. Dispositif de communication mobile (10) selon la revendication 7, dans lequel les parties latérales (20) s'étendent perpendiculairement à la partie transversale (22) et longitudinalement le long du corps (9).

11. Dispositif de communication mobile (10) selon l'une quelconque des revendications précédentes, comprenant en outre un capteur (27) destiné à détecter la présence de l'élément coulissant (12) dans l'une desdites première et seconde positions.

12. Dispositif de communication mobile (10) selon la revendication 11, dans lequel le capteur (27) est situé sur un cadre (16) du dispositif de communication mobile.

13. Dispositif de communication mobile (10) selon l'une quelconque des revendications précédentes, comprenant en outre une patte qui restreint l'accès à la nouvelle fonctionnalité lorsque l'élément coulissant (12) est dans l'une desdites première et seconde positions.

14. Dispositif de communication mobile (10) selon l'une quelconque des revendications précédentes, comprenant en outre un élément de verrouillage (29) destiné à verrouiller ledit élément coulissant (12) dans l'une desdites première et seconde positions.

15. Dispositif de communication mobile (10) selon la revendication 14, dans lequel l'élément de verrouillage (29) est situé sur l'élément coulissant (12).

16. Dispositif de communication mobile (10) selon l'une quelconque des revendications précédentes, dans lequel, lorsque ledit élément coulissant (12) est dans l'une desdites première et seconde positions, ledit dispositif est placé dans un mode de veille, tandis que, lorsqu'il est dans l'autre desdites première et seconde positions, le dispositif est en mode opérationnel.
